# EUROPÄISCHE PATENTANMELDUNG

(11) **EP 3 657 635 A1**
(43) Veröffentlichungstag der Anmeldung: **27.05.2020**
(21) Anmeldenummer: 18207820.4
(22) Anmeldetag: 22.11.2018
(51) Int. Cl.: H02K 1/26, H02K 3/12, H02K 3/487, H02K 15/00, H02K 17/16

(54) **ROTOR FÜR EINE ASYNCHRONMASCHINE MIT VERLUSTOPTIMIERTER STABGEOMETRIE, ASYNCHRONMASCHINE SOWIE VERFAHREN**

(71) Anmelder: Siemens Aktiengesellschaft, 80333 München (DE)
(72) Erfinder: Schmidt, Johannes, 97218 Gerbrunn (DE); Bach, Regina, 97640 Hendungen (DE)

(57) **Zusammenfassung**

Die Erfindung betrifft einen Rotor (4) für eine Asynchronmaschine (1) umfassend ein Blechpaket (10), welches eine Mehrzahl von Nuten (5) aufweist, und eine Mehrzahl von Stabelementen (9), wobei jeweils eines der Stabelemente (9) in einer der Nuten (5) angeordnet ist wobei die jeweiligen Stabelemente (9) aus einem elektrisch leitfähigen Material gefertigt sind, wobei die jeweiligen Nuten (5) in radialer Richtung (r) des Rotors (4) einen ersten Bereich (7) und einen an den ersten Bereich (7) angrenzenden zweiten Bereich (8) aufweisen, wobei der zweite Bereich (8) einer Außenseite (19) des Rotors (4) zugewandt ist und wobei die Stabelemente (9) in den jeweiligen ersten Bereichen (7) angeordnet sind und die jeweiligen zweiten Bereiche (8) frei von den Stabelementen (9) sind. Die Erfindung betrifft zudem eine Asynchronmaschine (1) sowie ein Verfahren zur Herstellung eines Rotors (4).

## Beschreibung

Die vorliegende Erfindung betrifft einen Rotor für eine Asynchronmaschine. Der Rotor umfasst ein Blechpaket, welches eine Mehrzahl von Nuten aufweist. Des Weiteren umfasst der Rotor eine Mehrzahl von Stabelementen, wobei jeweils eines der Stabelemente in einer der Nuten angeordnet ist und wobei die jeweiligen Stabelemente aus einem elektrisch leitfähigen Material gefertigt sind. Zudem betrifft die vorliegende Erfindung eine Asynchronmaschine mit einem solchen Rotor. Schließlich betrifft die vorliegende Erfindung ein Verfahren zum Herstellen eines Rotors für eine Asynchronmaschine.

Asynchronmaschinen weisen einen Rotor beziehungsweise Läufer auf, welcher ein Blechpaket mit einer Mehrzahl von Nuten aufweist. Diese Nuten sind üblicherweise mit elektrisch leitfähigen Stabelementen beziehungsweise Läuferstäben gefüllt. Bei Asynchronmaschinen treten je nach Nutgeometrie (Trapez-, Tropfen- oder Rechtecknut) und je nach Verhältnis von Rotorzu Statornutzahl circa im oberen Drittel jedes Läuferstabs überproportional hohe Verluste auf. Diese Verluste entstehen vorwiegend durch Feldlinien, die sich über das leitfähige Stabmaterial hinweg kreuzen, und dadurch Wirbelstromverluste in die Läuferstäbe induzieren. Dies betrifft sowohl geschlossene als auch offene Nutgeometrien. Besonders unvorteilhaft ist dieser Effekt bei offenen Nutgeometrien, bei trapezförmigen oder rechteckförmigen Nutformen sowie bei Nutverhältnissen, bei welchen die Anzahl der Rotornuten größer als die Anzahl der Statornuten ist.

Des Weiteren werden bei Rotor-Blechschnitten beziehungsweise Blechpaketen mit offener Nutgeometrie in den weitverbreiteten, da kostengünstigen Druckgussverfahren die Nutschlitze im Rotor mit einem leitfähigen Material, beispielsweise Aluminium oder Kupfer, ausgegossen. Das elektrisch leitfähige Material im Nutschlitz verursacht jedoch derart hohe Verluste, dass oftmals der Nutschlitz nachträglich spanend frei gearbeitet wird, um die Rotorverluste einzugrenzen. Dabei können die Verluste im Nutschlitz mindestens so hoch sein wie in dem kompletten Läuferstab. Insgesamt werden die oben beschriebene Verluste akzeptiert und damit die schlechtere Ausnutzung der elektrischen Maschine in Kauf genommen.

Des Weiteren weisen die Rotoren für Asynchronmaschinen üblicherweise einen Kurzschlusskäfig mit entsprechenden Kurzschlussringen auf. Durch diese Kurzschlussringe werden die jeweiligen Läuferstäbe elektrisch miteinander verbunden. Dabei sind die Umfangsgeschwindigkeit und damit auch die Maximaldrehzahl des Rotors insbesondere durch die Materialfestigkeit des Kurzschlussrings begrenzt. Typischerweise werden für den Kurzschlusskäfig Materialien mit einer hohen elektrischen Leitfähigkeit eingesetzt, um die ohmschen Verluste im Läufer gering zu halten. Allerdings weisen diese Materialien schlechte mechanische Eigenschaften und insbesondere eine geringe Zugfestigkeit auf, sodass zur Erhöhung der Umfangsgeschwindigkeit des Kurzschlussrings auf Legierungen oder eine zusätzliche Armierung zurückgegriffen wird. Derartige Legierungen haben jedoch den Nachteil, dass mit der Erhöhung der mechanischen Eigenschaften beziehungsweise der Zugfestigkeit die elektrische Leitfähigkeit sinkt und damit die ohmschen Läuferverluste steigen. Eine zusätzliche Armierung bedeutet einen erhöhten Fertigungsaufwand, da der Kurzschlussring in einem spanenden Verfahren auf Passmaß gefertigt wird, bevor anschließend ein Armierungsring gefügt werden kann. Auch hier werden der zusätzlich Fertigungsaufwand und die ohmschen Verluste akzeptiert.

Es ist Aufgabe der vorliegenden Erfindung, eine Lösung aufzuzeigen, wie ein Rotor für eine Asynchronmaschine, mit welchem ein effizienter Betrieb der Asynchronmaschine ermöglicht wird, auf einfache Weise bereitgestellt werden kann.

Diese Aufgabe wird erfindungsgemäß durch einen Rotor, durch eine Asynchronmaschine sowie durch ein Verfahren mit den Merkmalen gemäß den unabhängigen Ansprüchen gelöst. Vorteilhafte Weiterbildungen der Erfindung sind in den abhängigen Ansprüchen angegeben.

Ein erfindungsgemäßer Rotor für eine Asynchronmaschine umfasst ein Blechpaket, welches eine Mehrzahl von Nuten aufweist. Darüber hinaus umfasst der Rotor eine Mehrzahl von Stabelementen, wobei jeweils eines der Stabelemente in einer der Nuten angeordnet ist und wobei die jeweiligen Stabelemente aus einem elektrisch leitfähigen Material gefertigt sind. Dabei weisen die jeweiligen Nuten in radialer Richtung des Rotors einen ersten Bereich und einen an den ersten Bereich angrenzenden zweiten Bereich auf, wobei der zweite Bereich einer Außenseite des Rotors zugewandt ist. Außerdem sind die Stabelemente in den jeweiligen ersten Bereichen angeordnet und die jeweiligen zweiten Bereiche sind frei von den Stabelementen.

Der Rotor kann in einer elektrischen Maschine und insbesondere in einer Asynchronmaschine verwendet werden. Der Rotor kann auch als Läufer bezeichnet werden. Der Rotor umfasst das Blechpaket, welches aus einer Mehrzahl von Einzelblechen gefertigt sein kann. Dieses Blechpaket umfasst die Nuten, die entlang einer Umfangsrichtung des Rotors gleichmäßig beabstandet zueinander angeordnet sein können. Die jeweiligen Nuten können sich entlang einer axialen Richtung des Rotors erstrecken. Dabei sind in den jeweiligen Nuten zumindest bereichsweise die Stabelemente angeordnet. Die Stabelemente sind aus einem elektrisch leitfähigen Material, beispielsweise aus Kupfer oder aus Aluminium, gefertigt. Zudem kann der Rotor Kurzschlussringe aufweisen, mit denen die Stabelemente elektrische miteinander verbunden sind. Die Kurzschlussringe können zusammen mit den Stabelementen einen Kurzschlusskäfig des Rotors bilden.

Gemäß einem wesentlichen Aspekt der Erfindung ist vorgesehen, dass die jeweiligen Nuten - in radialer Richtung des Rotors betrachtet - in den ersten Bereich und in den zweiten Bereich eingeteilt werden. Dabei ist der erste Bereich einem unteren Bereich der Nut zugeordnet, welche einem Mittelpunkt des Rotors beziehungsweise einer Welle des Rotors zugewandt ist. Der zweite Bereich kann einem oberen Bereich beziehungsweise der Außenseite des Rotors zugewandt sein. Dabei sind die jeweiligen Stabelemente nur in dem ersten Bereich der jeweiligen Nuten angeordnet. Der zweite Bereich der jeweiligen Nuten ist frei von den Stabelementen. In dem zweiten Bereich sind also keine Stabelemente angeordnet. Mit anderen Worten befindet sich in dem zweiten Bereich kein elektrisch leitfähiges Material. Im einfachsten Fall kann der zweite Bereich mit Luft gefüllt sein. Innerhalb der Nut kann sich also über dem Stabelement ein freier Raum beziehungsweise ein luftgefüllter Raum befinden. In dem zweiten Bereich kann also ein amagnetisches und nicht leitfähiges Material angeordnet sein.

Dadurch, dass sich in dem zweiten Bereich der Nut kein elektrisch leitfähiges Material befindet, können die Wirbelstromverluste aufgrund von Feldlinien, die ansonsten über leitfähiges Material der Läuferstäbe hinweg verlaufen, reduziert werden. Auf diese Weise können die ohmschen Verluste vermindert werden. Dies ist besonders vorteilhaft, wenn die Nuten im Querschnitt trapezförmig oder rechteckförmig ausgebildet sind. Zudem kann die Anordnung der jeweiligen Stabelemente in dem ersten Bereich durch eine entsprechende Dimensionierung der Stabelemente erreicht werden. Insgesamt kann somit ein effizienter Betrieb des Rotors für die Asynchronmaschine auf einfache Weise erreicht werden.

Bevorzugt erstrecken sich die jeweiligen ersten Bereiche über zumindest zwei Drittel einer radialen Gesamtlänge der jeweiligen Nuten. Mit anderen Worten können sich die jeweiligen zweiten Bereiche über maximal ein Drittel der radialen Gesamtlänge erstrecken. Die radiale Gesamtlänge kann die Länge oder Erstreckung der Nut in radialer Richtung beschreiben.

Hierbei wird berücksichtigt, dass bei bekannten Stabelementen beziehungsweise Läuferstäben, welche die Nut vollständig ausfüllen, üblicherweise im oberen Drittel ohmsche Verluste infolge von Wirbelströmen auftreten. Vorliegend wird nun im oberen Drittel der Nut beziehungsweise dem zweiten Bereich kein Stabelement angeordnet. Auf diese Weise können die ohmschen Verluste auf effiziente Weise verringert werden.

Bei der Anordnung der Stabelemente in den Nuten ist insbesondere darauf zu achten, dass die Geometrie der Stabelemente in der Art gewählt wird, dass sowohl die zulässigen mechanischen Spannungen unter Fliehkraftbelastung nicht überschritten werden und außerdem keine nennenswerte Erhöhung des Streufelds innerhalb der Nut erfolgt. Hierzu kann es vorgesehen sein, dass die jeweiligen Nuten zumindest eine Erhebung aufweisen, durch welche das Stabelement in radialer Richtung in der Nut gehalten ist. Diese Erhebung kann sich an einer Oberseite des Stabelements befinden. Durch diesen Formschluss kann das Stabelement in radialer Richtung gehalten sein. Es kann auch vorgesehen sein, dass die Nut zumindest zwei Erhebungen aufweist.

In einer Ausführungsform weisen die jeweiligen Nuten Erhebungen auf und die jeweiligen Stabelemente weisen zu den Erhebungen korrespondierende Ausnehmungen auf, wobei die jeweiligen Stabelemente durch ein Zusammenwirken der Erhebungen und Ausnehmungen in der radialen Richtung gehalten sind. Die jeweiligen Nuten können also eine oder mehrere Erhebungen aufweisen. Diese Erhebungen können sich beispielsweise senkrecht zu einer Innenwand der Nut erstrecken. Diese Erhebungen können als Nasen, Verrundungen, Stege oder dergleichen ausgebildet sein. Das Stabelement weist zu den Erhebungen korrespondierende Ausnehmungen auf. Dabei sind die Erhebungen zumindest bereichsweise in den korrespondierenden Ausnehmungen angeordnet. Durch diese formschlüssige Verbindung können die Stabelemente in radialer Richtung in den Nuten gehalten werden. Insbesondere können die Stabelemente in den Nuten beziehungsweise an dem Blechpaket positioniert und fixiert sein.

Es kann auch vorgesehen sein, dass die jeweiligen Nuten Ausnehmungen aufweisen und die jeweiligen Stabelemente zu den Ausnehmungen korrespondierende Erhebungen aufweisen. Somit können die Stabelemente während des Betriebs der elektrischen Maschine auf zuverlässige Weise in dem ersten Bereich der Nuten gehalten werden.

In einer weiteren Ausführungsform bilden die jeweiligen zweiten Bereiche einen Kühlkanal zum Führen eines Kühlmediums. Die zweiten Bereiche beziehungsweise die Freiräume über den Stabelementen können zusätzlich zur Kühlung des Rotors verwendet werden. Beispielsweise können die zweiten Bereiche beziehungsweise die Kühlkanäle zur Führung eines Kühlluftstroms dienen. Mit anderen Worten kann eine Luftkühlung in Form einer Durchzugsbelüftung realisiert werden. Es kann auch vorgesehen sein, dass die Kühlkanäle zum Führen einer Kühlflüssigkeit dienen. Somit kann beispielsweise eine Wasser- oder Ölkühlung realisiert werden. Dabei ist es vor allem vorteilhaft, dass die Wärme direkt an der Verlustquelle, beispielsweise den Rotor-Zahnköpfen und den Stabelementen, abgeführt werden kann. Somit kann insgesamt eine verbesserte Wärmeabfuhr realisiert werden.

In einer weiteren Ausführungsform weist der Rotor eine Mehrzahl von Füllelementen auf, welche in den zweiten Bereichen der jeweiligen Nuten angeordnet sind, wobei die Füllelemente aus einem amagnetischen Material und/oder einem elektrisch isolierenden Material gefertigt sind. In dem oberen Drittel beziehungsweise dem zweiten Bereich der Nuten kann also ein jeweiliges Füllelement angeordnet sein. Das obere Drittel über den Stabelementen kann mit einem amagnetischen, nichtleitfähigen oder schlecht leitfähigen Material gefüllt sein. Hierbei ist es insbesondere vorgesehen, dass das Material, aus dem die jeweiligen Füllelemente gefertigt sind, temperaturbeständig ist. Bei dem Material kann sich beispielsweise um ein keramisches Material, Edelstahl, Titan, eine Inocel®-Legierung, eine Vergussmasse oder dergleichen handeln. Die jeweiligen Füllelemente können so ausgebildet sein, dass diese den zweiten Bereich vollständig ausfüllen. Durch die Anordnung der Füllelemente in dem zweiten Bereich der Nuten ergibt sich ein Formschluss, welcher die Stabelemente fixiert und positioniert. Darüber hinaus ergibt sich der Vorteil, dass die Füllelemente bei der Herstellung des Rotors als Dichtelement im Druckguss-Prozess genutzt werden können. Hier können beispielsweise zunächst die jeweiligen Füllelemente in den jeweiligen zweiten Bereichen der Nuten angeordnet werden und anschließend zum Herstellen der jeweiligen Stabelemente ein elektrisch leitfähiges Material in die ersten Bereiche der jeweiligen Nuten eingebracht werden.

In einer weiteren Ausführungsform weisen die jeweiligen Nuten an der Außenseite Nutschlitze auf, wobei das Füllelement zudem in den Nutzschlitzen angeordnet sein kann. Dadurch, dass sich in den Nutschlitzen kein elektrisch leitfähiges Material befindet, können die Verluste deutlich reduziert werden. Darüber hinaus kann auf eine nachträgliche spanende Bearbeitung der Nutschlitze verzichtet werden. Somit kann im Vergleich zum Stand der Technik auf einen zusätzlichen Herstellungsschritt verzichtet werden. Durch die Anordnung der Füllelemente in dem zweiten Bereich der Nuten kann zudem verhindert werden, dass das leitfähige Material bei der Herstellung der Stabelemente während eines Druckguss-Prozesses in die Nutschlitze gelangen kann.

In einer weiteren Ausgestaltung weist der Rotor an radialen Enden jeweils ein Ringelement auf und die jeweiligen Füllelemente sind mit den Ringelementen verbunden. Der Rotor kann zwei Kurschlussringe aufweisen, die mit den jeweiligen Stabelementen elektrisch verbunden sind. Die Kurzschlussringe können zusammen mit den Stabelementen den sogenannten Kurschlusskäfig bilden. Zusätzlich zu den Kurzschlussringen kann der Rotor zwei Ringelemente aufweisen, die mit den jeweiligen Füllelementen verbunden sein können. Diese Ringelemente können an den äußeren radialen Enden der Kurzschlussringe angeordnet sein. Die Ringelemente können zusammen mit den Füllelementen eine Käfigeinrichtung bilden, welche auch als "Armierungs-Käfig" oder Armierung bezeichnet werden kann. Zur Erhöhung der Drehzahlfestigkeit weist dieser Armierungs-Käfig die Ringelemente über den eigentlichen Kurzschlussringen auf. Aufgrund der erhöhten Festigkeitseigenschaften des Armierungs-Käfigs gegenüber dem Material des Kurzschlusskäfigs reduzieren sich die mechanischen Spannungen in den Kurzschlussringen unter Fliehkraftbelastung. Auf diese Weise können höhere Umfangsgeschwindigkeiten und damit höhere Maximaldrehzahlen realisiert werden.

In einer weiteren Ausführungsform weisen die jeweiligen Ringelemente ein umlaufendes Sicherungselement zur axialen Positionierung des jeweiligen Ringelements auf. Das Sicherungselement kann als umlaufende Nut ausgebildet sein. Das Sicherungselement kann sich in radialer Richtung nach innen beziehungsweise in Richtung des Mittelpunkts des Rotors oder nach außen erstrecken. Dieses Sicherungselement dient zur axialen Fixierung des Armierungs-Käfigs. Insbesondere dient das Sicherungselement zur axialen Fixierung des Ringelements an dem Kurzschlussring. Hierzu kann der Kurzschlussring eine zu dem Sicherungselement korrespondierende Ausnehmung aufweisen. Es kann auch vorgesehen sein, dass die jeweiligen Ringelemente mehrere Sicherungselemente aufweisen.

In einer Ausgestaltung ist an einem der Ringelemente in Umfangsrichtung jedes zweite der Füllelemente angeordnet und an dem anderen der Ringelemente sind die anderen der Füllelemente angeordnet, wobei jeweiligen Füllelemente eine Länge aufweisen, welche einer Länge des Blechpakets entspricht. Der Armierungs-Käfig kann aus zwei Teilen gebildet sein, die miteinander verbunden werden. Ein erster Teil kann ein erstes Ringelement aufweisen, bei welchem in Umfangsrichtung jedes zweite Füllelement mit einem ersten Ringelement verbunden ist. Das erste Ringelement kann auch einteilig mit diesen Füllelementen ausgebildet sein. Der zweite Teil kann ein zweites Ringelement umfassen, wobei das zweite Ringelement mit den übrigen Füllelementen verbunden sein kann oder einteilig mit diesen ausgebildet sein kann. Auch bei dem zweiten Ringelement kann jedes zweite der Füllelemente in Umfangsrichtung angeordnet sein. Insgesamt werden der erste Teil und der zweite Teil miteinander zu dem Armierungs-Käfig verbunden. Die jeweiligen Füllelemente können an den freien Enden entsprechende Erhebungen aufweisen, die mit korrespondieren Ausnehmungen in dem Ringelement des anderen Teils verbunden werden. Dies ermöglicht eine einfache Fertigung des Armierungs-Käfigs.

In einer alternativen Ausführungsform sind an jedem der Ringelemente Teilfüllelemente angeordnet, wobei die jeweiligen Teilfüllelemente eine Länge aufweisen, welche einer Hälfte der Länge des Blechpaketes entspricht und wobei jeweils zwei korrespondierende und miteinander verbundene Teilfüllelemente eines der Füllelemente bilden. Auch hier kann der Armierungs-Käfig aus zwei Teilen gebildet sein. An jedem der Ringelemente sind in Umfangsrichtung die jeweiligen Teilfüllelemente angeordnet. Die jeweiligen Teilfüllelemente können die gleiche Länge aufweisen, welche insbesondere der Hälft der Länge des Blechpakets beziehungsweise der halben Eisenpaketlänge entspricht. Die Teilfüllelemente des ersten Teils können an den jeweiligen freien Enden jeweils Erhebungen aufweisen. Die Teilfüllelemente des zweiten Teils können an den jeweiligen freien Enden zu diesen Erhebungen korrespondierende Ausnehmungen aufweisen. Alternativ dazu können die Erhebungen und Ausnehmungen an den Teilfüllelementen eines Teils auch abwechselnd ausgebildet sein. Zur radialen Positionierung können die Teilfüllelemente des ersten Teils und des zweiten Teils ähnlich einem Nut-Feder-System miteinander verbunden werden. Hierzu können die Erhebungen in die korrespondierenden Ausnehmungen greifen. Auch hierdurch kann eine einfache und kostengünstige Fertigung ermöglicht werden.

Eine erfindungsgemäße Asynchronmaschine umfasst einen erfindungsgemäßen Rotor. Zudem umfasst die Asynchronmaschine einen Stator, welcher auch als Ständer bezeichnet werden kann. Dabei ist der Rotor drehbar zu dem Stator ausgebildet. Der Stator kann eine Mehrzahl von Nuten aufweisen. Hierbei ist insbesondere vorgesehen, dass sich eine Anzahl von Nuten des Stators von einer Anzahl der Nuten des Rotors unterscheidet.

Ein erfindungsgemäßes Verfahren dient zum Herstellen eines Rotors für eine Asynchronmaschine. Das Verfahren umfasst das Bereitstellen eines Blechpakets, welches eine Mehrzahl von Nuten aufweist. Des Weiteren umfasst das Verfahren das Fertigen einer Mehrzahl von Stabelementen aus einem elektrisch leitfähigen Material und das Anordnen jeweils eines der Stabelemente in einer der Nuten. Dabei weisen die jeweiligen Nuten in radialer Richtung des Rotors einen ersten Bereich und einen an den ersten Bereich angrenzenden zweiten Bereich auf, wobei der zweite Bereich einer Außenseite des Rotors zugewandt ist. Darüber hinaus werden die Stabelemente in den jeweiligen ersten Bereichen angeordnet und die jeweiligen zweiten Bereiche sind frei von den Stabelementen.

Bei der Herstellung des Rotors kann zunächst das Blechpaket bereitgestellt werden. Im Anschluss daran können die Füllelemente des Armierungs-Käfigs beziehungsweise der Käfigeinrichtung bereitgestellt werden. Dabei können die jeweiligen Füllelemente in den zweiten Bereichen der jeweiligen Nuten angeordnet werden. Danach kann das elektrisch leitfähige Material in die ersten Bereiche der jeweiligen Nuten eingebracht werden. Hierzu kann ein additives Fertigungsverfahren, ein Gussverfahren oder ein Druckgussverfahren genutzt werden. Auf diese Weise können die Stabelemente und die Kurzschlussringe gefertigt werden. Danach können die Ringelemente der Käfigeinrichtung an den Kurzschlussringen angeordnet und positioniert werden.

Die mit Bezug auf den erfindungsgemäßen Rotor vorgestellten bevorzugten Ausführungsformen und deren Vorteile gelten entsprechend für die erfindungsgemäße Asynchronmaschine sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: in einer geschnittenen Seitenansicht eine Asynchronmaschine gemäß dem Stand der Technik;
- FIG 2: in einer geschnittenen Seitenansicht eine Asynchronmaschine gemäß einer ersten Ausführungsform, wobei Stabelemente nur in einem ersten Bereich jeweiliger Nut angeordnet sind;
- FIG 3: in einer geschnittenen Seitenansicht eine Asynchronmaschine gemäß einer weiteren Ausführungsform;
- FIG 4: in einer geschnittenen Seitenansicht eine Asynchronmaschine gemäß einer weiteren Ausführungsform, wobei die jeweiligen Nuten Erhebungen zum Halten des Stabelements aufweisen;
- FIG 5: in einer geschnittenen Seitenansicht eine Asynchronmaschine gemäß einer weiteren Ausführungsform, wobei die jeweiligen Nuten Erhebungen und die jeweiligen Stabelemente Ausnehmungen aufweisen;
- FIG 6: in einer geschnittenen Seitenansicht eine Asynchronmaschine gemäß einer weiteren Ausführungsform, wobei in zweiten Bereichen der jeweiligen Nuten Füllelemente angeordnet sind;
- FIG 7: in einer geschnittenen Seitenansicht eine Asynchronmaschine, wobei in zweiten Bereichen der jeweiligen Nuten Füllelemente angeordnet sind, gemäß einer weiteren Ausführungsform;
- FIG 8: in einer Perspektivansicht einen Teil einer Käfigeinrichtung, welche ein Ringelement und Füllelemente aufweist;
- FIG 9: in einer Perspektivansicht einen Teil einer Käfigeinrichtung gemäß einer weiteren Ausführungsform;
- FIG 10: in einer Perspektivansicht einen Teil einer Käfigeinrichtung, wobei das Ringelement ein Sicherungselement aufweist, und
- FIG 11: einen Ausschnitt einer geschnittenen Seitenansicht des Rotors.

In den Figuren werden gleiche oder funktionsgleiche Elemente mit den gleichen Bezugszeichen versehen.

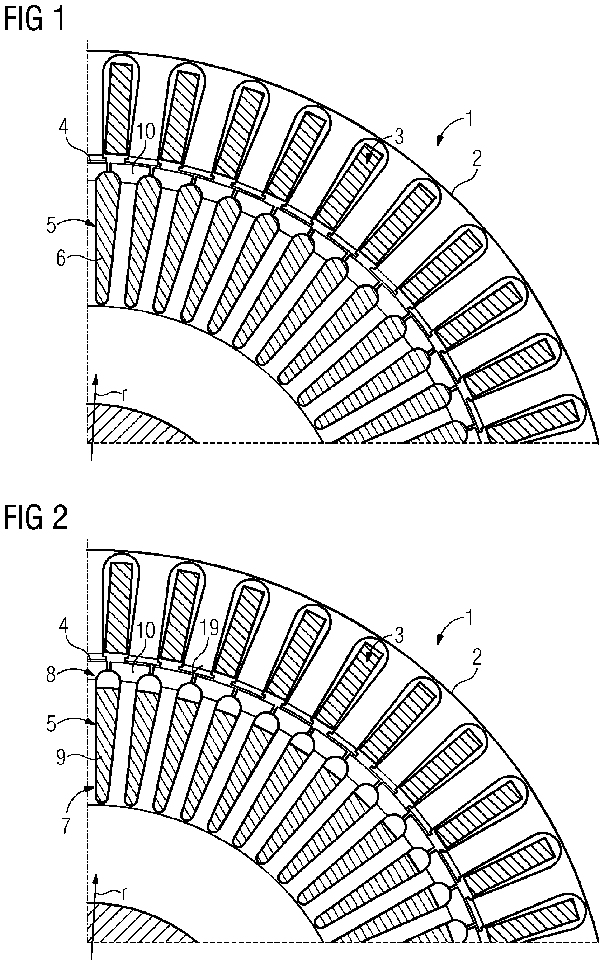

FIG 1 zeigt einen Ausschnitt einer geschnittenen Seitenansicht einer Asynchronmaschine 1 gemäß dem Stand der Technik. Die Asynchronmaschine 1 umfasst einen Stator 2, welcher eine Mehrzahl von Nuten 3 beziehungsweise Statornuten aufweist. In diesen Nuten 3 ist eine Wicklung des Stators 2 angeordnet. Darüber hinaus umfasst die Asynchronmaschine 1 einen Rotor 4, welcher konzentrisch und innenliegend zu dem Stator 2 ausgebildet ist. Dabei ist der Rotor 4 drehbar zu dem Stator 2 ausgebildet. Der Rotor 4 umfasst eine Mehrzahl von Nuten 5 beziehungsweise Rotornuten, welche in ein Blechpaket 10 eingebracht sind. In den jeweiligen Nuten 5 sind Läuferstäbe 6 angeordnet. Diese Läuferstäbe 6 sind aus einem elektrisch leitfähigen Material, beispielsweise Kupfer oder Aluminium, gefertigt. Im Betrieb der Asynchronmaschine 1 können in Abhängigkeit von der Geometrie der Nuten 5 und einem Verhältnis der Anzahl der Nuten 3 im Stator 2 zu den Nuten 5 im Rotor 4 in den Läuferstäben 6 Wirbelstromverluste auftreten.

FIG 2 zeigt einen Ausschnitt einer geschnittenen Seitenansicht einer Asynchronmaschine 1 gemäß einer ersten Ausführungsform. Dabei entspricht der Stator 2 dem Stator 2 der Asynchronmaschine 1 gemäß dem Stand der Technik aus FIG 1. Der Rotor 4 weist ebenfalls die Nuten 5 auf. Dabei werden die jeweiligen Nuten 5 in einen ersten Bereich 7 und in einen zweiten Bereich 8 eingeteilt. Der erste Bereich 7 ist einem Mittelpunkt beziehungsweise einer Welle 22 des Rotors 4 zugewandt und der zweite Bereich 8 ist einer Außenseite 19 oder Oberseite des Rotors 4 zugewandt. Der erste Bereich 7 und der zweite Bereich 8 grenzen aneinander an. In radialer Richtung r des Rotors 4 nimmt der erste Bereich zumindest zwei Drittel einer radialen Gesamtlänge der Nut 4 ein und der zweite Bereich 8 nimmt maximal ein Drittel der radialen Gesamtlänge ein.

In dem ersten Bereich 7 ist dabei ein Stabelement 9 angeordnet, welches den Läuferstab 6 ersetzt beziehungsweise als Läuferstab 6 dient. Dieses Stabelement 9 ist aus einem elektrisch leitfähigen Material, insbesondere Kupfer oder Aluminium, gefertigt. Der zweite Bereich 8 ist frei von dem Stabelement 9. Beispielsweise kann der zweite Bereich 8 mit Luft gefüllt sein. Somit befindet sich in dem zweiten Bereich 8 beziehungsweise dem oberen Drittel der Nut 5 kein elektrisch leitfähiges Material. Dadurch können die Wirbelstromverluste vermindert werden. Der zweite Bereich 8 kann auch als Kühlkanal zum Führen eines Kühlmediums dienen.

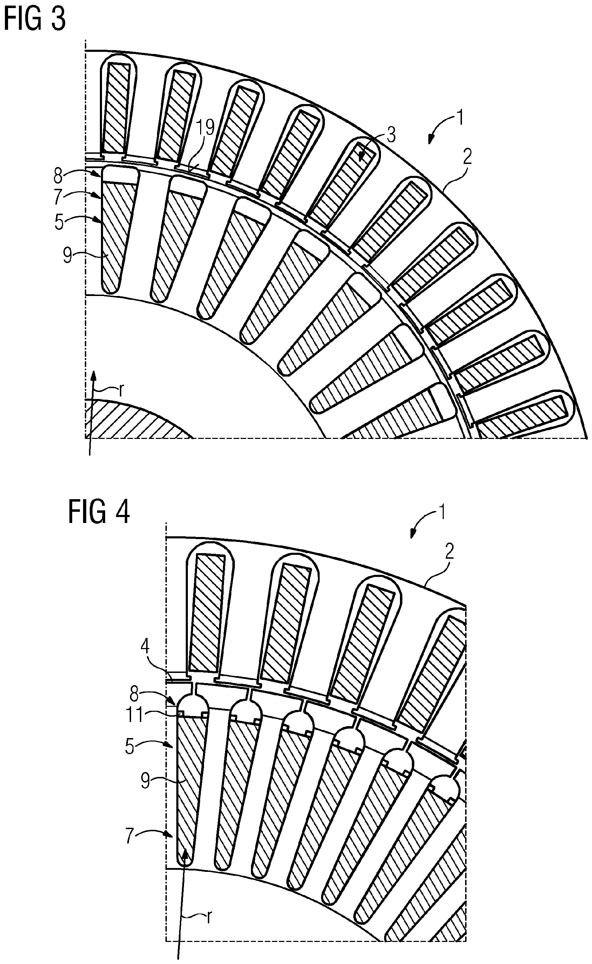

FIG 3 zeigt einen Ausschnitt einer geschnittenen Seitenansicht einer Asynchronmaschine 1 gemäß einer weiteren Ausführungsform. Hierbei sind die Nuten 5 im Vergleich zu den Nuten 5 gemäß FIG 2 breiter ausgebildet und weisen eine geschlossene Nutgeometrie auf. Die Stabelemente 9 können grundsätzlich für unterschiedliche Nutgeometrien verwendet werden.

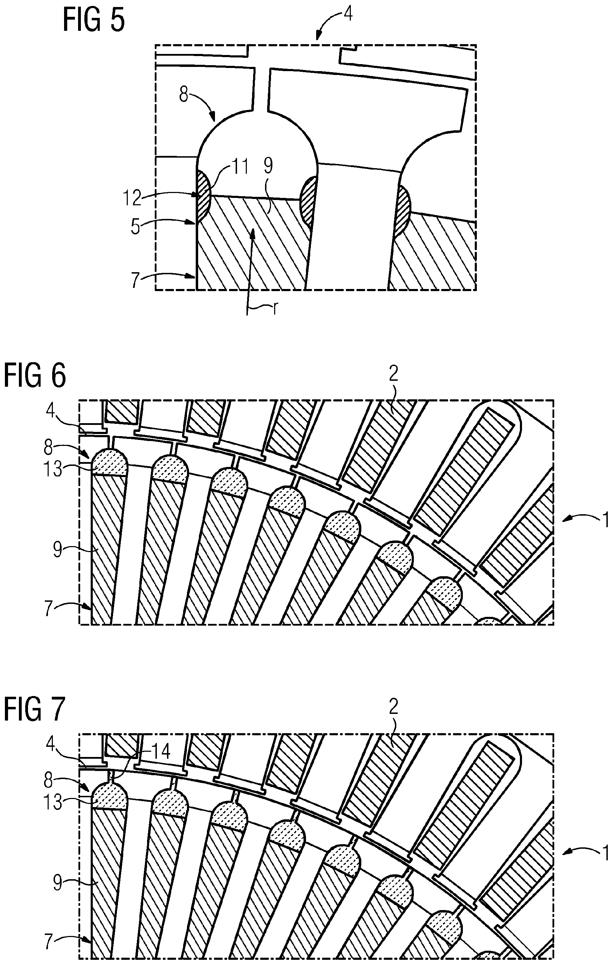

FIG 4 zeigt einen Ausschnitt einer geschnittenen Seitenansicht einer Asynchronmaschine 1 gemäß einer weiteren Ausführungsform. Hierbei weisen die Nuten 5 im Vergleich zu den Nuten gemäß FIG 2 zusätzliche Erhebungen 11 auf. Diese Erhebungen 11 liegen an einer Oberseite der Stabelemente 9 an. Dadurch können die Stabelemente 9 im Betrieb der Asynchronmaschine 1 in radialer Richtung r gesichert beziehungsweise gehalten werden. FIG 5 zeigt einen Ausschnitt einer geschnittenen Seitenansicht eines Rotors 4 gemäß einer weiteren Ausführungsform. Auch hier weisen die Nuten 5 Erhebungen 11 auf. Zudem weist das Stabelement 9 Aussparungen 12 auf, welche zu den Erhebungen 11 korrespondieren. Durch diese formschlüssige Verbindung kann das Stabelement 9 in radialer Richtung r gesichert werden.

FIG 6 zeigt einen Ausschnitt einer geschnittenen Seitenansicht einer Asynchronmaschine 1 gemäß einer weiteren Ausführungsform. Hier ist im Vergleich zu der Asynchronmaschine 1 gemäß FIG 2 in dem zweiten Bereich 8 der Nut 5 ein Füllelement 13 angeordnet. Dieses Füllelement 13 ist aus einem amagnetischen Material gefertigt, welches elektrisch nicht leitfähig ist oder eine sehr geringe Leitfähigkeit aufweist. Zudem ist das Material temperaturbeständig. Die Füllelemente 13 können aus einer Keramik, aus Edelstahl, aus Titan oder dergleichen gefertigt sein. Auch durch diese Füllelemente 13 können die Wirbelstromverluste reduziert werden. Zudem ist das Stabelement 9 durch das Füllelement 13 in der Nut 5 gehalten. FIG 7 zeigt einen Ausschnitt einer geschnittenen Seitenansicht einer Asynchronmaschine 1 gemäß einer weiteren Ausführungsform. Hier sind zudem Nutschlitze 14 mit dem Füllelement 13 beziehungsweise dem Material der Füllelemente 13 gefüllt. Im Vergleich zu Nutschlitzen 14, die mit einem elektrisch leitfähigen Material gefüllt sind, ergeben sich hierdurch deutlich geringere Verluste.

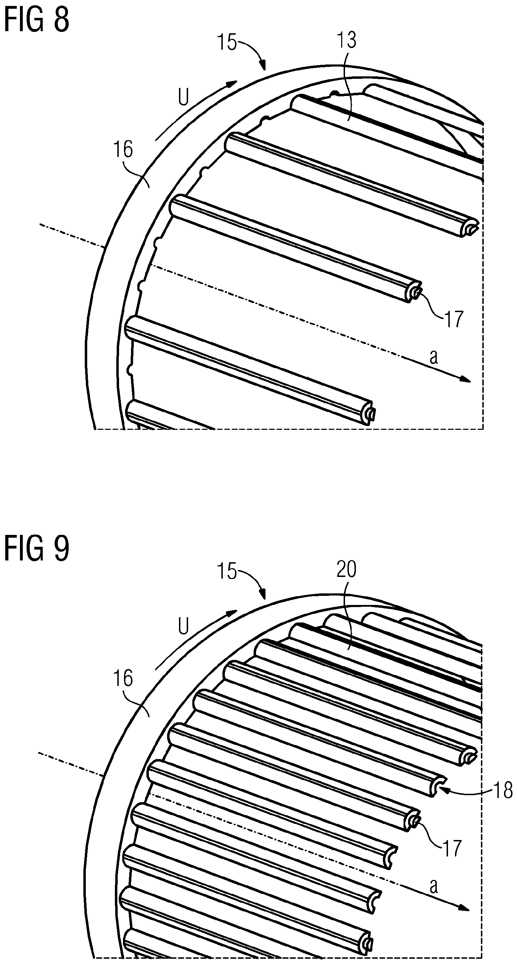

FIG 8 zeigt einen Ausschnitt einer Perspektivansicht eines Teils 15 einer Käfigeinrichtung. Die Käfigeinrichtung, welche auch als "Armierungs-Käfig" bezeichnet werden kann, umfasst die Füllelemente 13 sowie Ringelemente 16. Die jeweiligen Ringelemente 16 können außen (radial) auf die Kurzschlussringe 23 des Rotors 4 aufgesetzt werden. Vorliegend ist bei dem Teil 15 in Umfangsrichtung U des Rotors 4 beziehungsweise des Ringelements 16 jedes zweite Füllelement 13 an dem Ringelement 16 angeordnet. Dabei erstrecken sich die jeweiligen Füllelemente 13 entlang einer axialen Richtung a des Rotors 4 und weisen eine Länge auf, welcher einer Eisenpaketlänge des Rotors 4 beziehungsweise einer Länge des Blechpakets 10 entsprechen. An den jeweiligen freien Enden weisen die Füllelemente 14 Erhebungen 17 auf, welche mit korrespondierenden Ausnehmungen 18 eines baugleichen Teils 15 verbunden werden können. Bei dem vorliegend dargestellten Teil 15 dienen die Ausnehmungen 18 zur Aufnahme der Erhebungen 17 der Füllelemente 13 eines anderen Teils 15. Auf diese Weise können zwei Teile 15 zu einem "Armierungs-Käfig" verbunden werden.

FIG 9 zeigt einen Ausschnitt einer Perspektivansicht eines Teils 15 einer Käfigeinrichtung gemäß einer weiteren Ausführungsform. Dieses Teil 15 weist ebenfalls ein Ringelement 16 auf. An dem Ringelement 16 sind in Umfangsrichtung U gleichmäßig verteilt Teilfüllelemente 20 angeordnet. Diese Teilfüllelemente 20 erstrecken sich entlang der axialen Richtung a des Rotors 4 und weisen eine Länge auf, welche der Hälfte der Eisenpaketlänge des Rotors 4 entspricht. Die Teilfüllelemente 20 weisen an den freien Enden in Umfangsrichtung U abwechselnd Erhebungen 17 und Ausnehmungen 18 auf. Diese Erhebungen 17 und Ausnehmungen 18 können mit korrespondierenden Ausnehmungen 18 und Erhebungen 17 eines baugleichen Teils 15 verbunden werden. Somit kann der "Armierungs-Käfig" bereitgestellt werden.

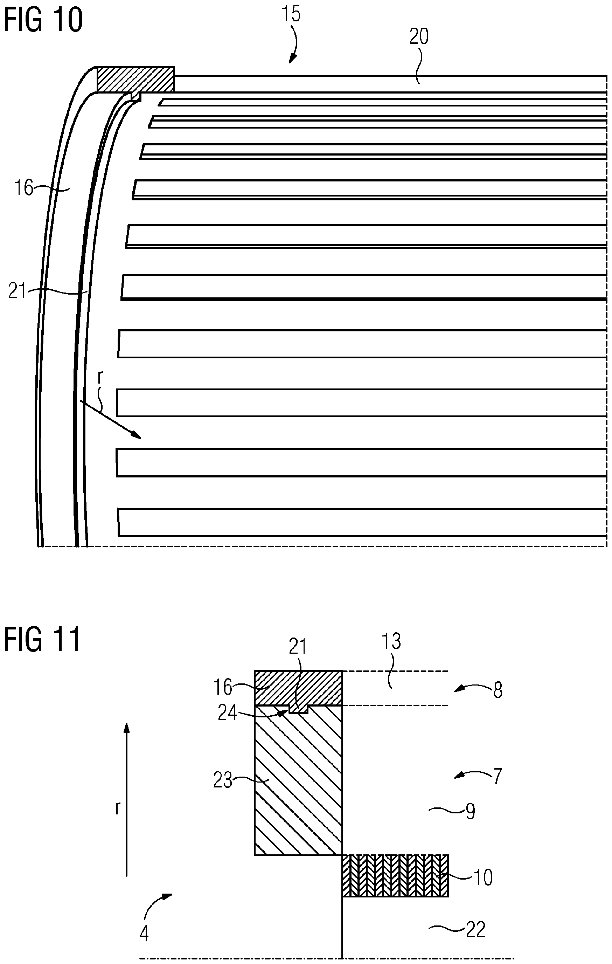

FIG 10 zeigt das Teil 15 gemäß FIG 9 in einer weiteren Perspektivansicht. Hierbei ist zu erkennen, dass das Ringelement 16 umlaufendes Sicherungselement 21 zur axialen Positionierung des Ringelements 16 an Kurzschlusskäfig aufweist. Das Sicherungselement 21 erstreckt sich dabei entlang der radialen Richtung r nach innen. Es kann auch vorgesehen sein, dass sich das Sicherungselement 21 in radialer Richtung r nach außen erstreckt.

FIG 11 zeigt einen Ausschnitt einer Schnittdarstellung des Rotors 4. Hier ist das Blechpaket 10 zur erkennen, welches mit der Welle 22 verbunden ist. Zudem sind das Stabelement 9, welches in dem ersten Bereich 7 der Nut 5 angeordnet ist, sowie das Füllelement 13, welches in dem zweiten Bereich 8 der Nut 5 angeordnet ist, gezeigt. Darüber hinaus ist der Kurzschlussring 23 gezeigt, welcher mit den Stabelementen 9 verbunden ist. In radialer Richtung r auf beziehungsweise oberhalb des Kurzschlussrings 23 ist das Ringelement 16 angeordnet. Dabei ist das Sicherungselement 21 in einer korrespondierenden Ausnehmung 24 des Kurzschlussrings 23 angeordnet. Somit kann eine axiale Positionierung des Ringelements 21 erreicht werden. Durch die Armierung des Kurschlussrings 23 kann die Drehzahlfestigkeit beziehungsweise die Umfangsgeschwindigkeit gesteigert werden. Dies wird in Kombination mit der verlustoptimierten Geometrie der Stabelemente 9 erreicht.

## Patentansprüche

1. Rotor (4) für eine Asynchronmaschine (1) umfassend:
- ein Blechpaket (10), welches eine Mehrzahl von Nuten (5) aufweist, und
- eine Mehrzahl von Stabelementen (9),
- wobei jeweils eines der Stabelemente (9) in einer der Nuten (5) angeordnet ist und
- wobei die jeweiligen Stabelemente (9) aus einem elektrisch leitfähigen Material gefertigt sind,
**dadurch gekennzeichnet, dass**
- die jeweiligen Nuten (5) in radialer Richtung (r) des Rotors (4) einen ersten Bereich (7) und einen an den ersten Bereich (7) angrenzenden zweiten Bereich (8) aufweisen, wobei der zweite Bereich (8) einer Außenseite (19) des Rotors (4) zugewandt ist,
- die Stabelemente (9) in den jeweiligen ersten Bereichen (7) angeordnet sind und die jeweiligen zweiten Bereiche (8) frei von den Stabelementen (9) sind.

2. Rotor (4) nach Anspruch 1, **dadurch gekennzeichnet, dass** sich die jeweiligen ersten Bereiche (7) über zumindest zwei Drittel einer radialen Gesamtlänge der jeweiligen Nuten (5) erstrecken.

3. Rotor (4) nach Anspruch 1 oder 2, **dadurch gekennzeichnet, dass** die jeweiligen Nuten (5) Erhebungen (11) und die jeweiligen Stabelemente (9) zu den Erhebungen (11) korrespondierende Ausnehmungen (12) aufweisen, wobei die jeweiligen Stabelemente (9) durch ein Zusammenwirken der Erhebungen (11) und Ausnehmungen (12) in der radialen Richtung (r) gehalten sind.

4. Rotor (4) nach einem der vorhergehenden Ansprüche, **dadurch gekennzeichnet, dass** die jeweiligen zweiten Bereiche (8) einen Kühlkanal zum Führen eines Kühlmediums bilden.

5. Rotor (4) nach einem der Ansprüche 1 bis 3, **dadurch gekennzeichnet, dass** der Rotor (4) eine Mehrzahl von Füllelementen (13) aufweist, welche in den zweiten Bereichen (8) der jeweiligen Nuten (5) angeordnet sind, wobei die Füllelemente (13) aus einem amagnetischen Material und/oder einem elektrisch isolierenden Material gefertigt sind.

6. Rotor (4) nach Anspruch 5, **dadurch gekennzeichnet, dass** die jeweiligen Nuten (5) an der Außenseite (19) Nutschlitze (14) aufweisen, wobei die Füllelemente (13) zudem in den Nutschlitzen (14) angeordnet sind.

7. Rotor (4) nach Anspruch 5 oder 6, **dadurch gekennzeichnet, dass** der Rotor (4) an radialen Enden jeweils ein Ringelement (16) aufweist und die jeweiligen Füllelemente (13) mit den Ringelementen (16) verbunden sind.

8. Rotor (4) nach Anspruch 7, **dadurch gekennzeichnet, dass** die jeweiligen Ringelemente (16) ein umlaufendes Sicherungselement (21) zur axialen Positionierung des jeweiligen Ringelements (16) aufweisen.

9. Rotor (4) nach Anspruch 7 oder 8, **dadurch gekennzeichnet, dass** an einen der Ringelemente (16) in Umfangsrichtung (U) jedes zweite der Füllelemente (13) angeordnet ist und an dem anderen der Ringelemente (16) die anderen der Füllelemente (13) angeordnet sind, wobei jeweiligen Füllelemente (13) eine Länge aufweisen, welche einer Länge des Blechpakets (10) entspricht.

10. Rotor (4) nach Anspruch 7 oder 8, **dadurch gekennzeichnet, dass** an jedem der Ringelemente (16) Teilfüllelemente (20) angeordnet sind, wobei die jeweiligen Teilfüllelemente (20) eine Länge aufweisen, welche einer Hälfte einer Länge des Blechpaketes (10) entspricht und wobei jeweils zwei korrespondierende und verbundene Teilfüllelemente (20) eines der Füllelemente (13) bilden.

11. Asynchronmaschine (1) mit einem Rotor (4) nach einem der vorhergehenden Ansprüche und mit einem Stator (2).

12. Verfahren zum Herstellen eines Rotors (4) für eine Asynchronmaschine (1) mit den Schritten:
- Bereitstellen eines Blechpakets (10), welches eine Mehrzahl von Nuten (5) aufweist,
- Fertigen einer Mehrzahl von Stabelementen (9) aus einem elektrisch leitfähigen Material und
- Anordnen jeweils eines der Stabelemente (9) in einer der Nuten (5),
**dadurch gekennzeichnet, dass**
- die jeweiligen Nuten (5) in radialer Richtung (r) des Rotors (4) einen ersten Bereich (7) und einen an den ersten Bereich (7) angrenzenden zweiten Bereich (8) aufweisen, wobei der zweite Bereich (8) einer Außenseite (19) des Rotors (4) zugewandt ist,
- die Stabelemente (9) in den jeweiligen ersten Bereichen (7) angeordnet werden und die jeweiligen zweiten Bereiche (8) frei von den Stabelementen (9) sind.
